# EUROPÄISCHE PATENTANMELDUNG

(11) **EP 4 068 736 A2**
(43) Veröffentlichungstag der Anmeldung: **05.10.2022**
(21) Anmeldenummer: 22161833.3
(22) Anmeldetag: 14.03.2022
(51) Int. Cl.: H04L 67/12, H04W 4/06, H04W 4/50, H04W 4/80

(54) **VERFAHREN ZUM BETRIEB EINER SMARTEN WASSERINSTALLATION**

(30) Priorität: 30.03.2021 DE 102021108026
(71) Anmelder: Grohe AG, 58675 Hemer (DE)
(72) Erfinder: RICHARD, Thilo, 44267 Dortmund (DE); HICKERT, Fabian, 59759 Arnsberg (DE)

(57) **Zusammenfassung**

Verfahren zum Betrieb eines Systems (1) bestehend aus:
- einer Komponente (2) einer Wasserinstallation (10) mit mindestens einem wasserführenden Bauteil (3), wobei die Komponente (2) mindestens eine Einrichtung zur Überwachung (4) des wasserführenden Bauteils (3), ein elektronisches Steuergerät (5), sowie ein Funkmodul (6) eingerichtet zumindest zum Versenden von Datennachrichten (11) mit einem Funksignal (12) aufweist,
- einem Endgerät (7) mit einem Modul (8) zur Darstellung von Zustandsinformationen (14) des wasserführenden Bauteils (3) sowie einem Funkmodul (9) eingerichtet zumindest zum Empfangen von einem Funksignal (12) mit Datennachrichten (11),
wobei das Verfahren folgende Schritte aufweist:
a) Ermitteln eines Zustandsinformationsparameters (13) der Wasserinstallation (10) mit der Einrichtung zur Überwachung (4) der Komponente (2) zur Überwachung der Wasserinstallation (10);
b) Auswerten der Zustandsinformationsparameters (13) in dem elektronischen Steuergerät (5) der Komponente (2) sowie Erstellung mindestens einer Datennachricht (11) beinhaltend Informationen aus dem Zustandsinformationsparameter (13);
c) Versenden der mindestens einen Datennachricht (11) mit dem Funkmodul (6) der Komponente (2) an einen unbegrenzten Empfängerkreis mit einem Funksignal (12);
d) Empfangen des Funksignals (12) mit der Datennachricht (11) mit dem Funkmodul (9) des Endgerätes (7); und
e) Darstellen einer Zustandsinformation (14) mit dem Modul (8) des Endgerätes (7) zur Darstellung basierend auf der Datennachricht (11) für einen Benutzer (21).

## Beschreibung

Die vorliegende Erfindung betriff ein Verfahren zum Betrieb eines Systems, umfassend eine Wasserinstallation mit speziellen Überwachungsfunktionen zur Überwachung von Komponenten der Wasserinstallation. Eine solche Wasserinstallation kann insbesondere auch als eine smarte Wasserinstallation bezeichnet werden.

Bei derartig smarter Wasserinstallation ist die Kommunikation zwischen Komponenten der Wasserinstallation untereinander und gegebenenfalls auch die Kommunikation zwischen Komponenten der Wasserinstallation und Endgeräten eines Benutzers, mit welchen er Benutzerfunktionen der Wasserinstallation steuern und oder überwachen kann, eine sehr wichtige Fähigkeit, weil "smarte" Funktionen regelmäßig derartige Kommunikation erfordern.

Es sind verschiedene Verfahren zur Datenübertragung zwischen Komponenten smarter Systeme im Hausbereich (Smart Homebereich) bekannt. Diese Verfahren haben allerdings die Eigenschaft gemein, dass gemäß einem Protokoll zur Aushandlung von Datenverbindungen zunächst Datenverbindungen zwischen Komponenten des Systems bzw. zwischen Komponenten des Systems und Endgeräten aufgebaut bzw. etabliert werden müssen. Diese Datenverbindungen können dann wie fest eingerichtete Datenkanäle zwischen den einzelnen Komponenten bzw. Endgeräten betrachtet werden. Bei der Aushandlung von Datenverbindungen werden normalerweise zunächst sogenannte Tokens zwischen den Komponenten bzw. den mobilen Endgeräten ausgetauscht, mit denen sich die Komponenten bzw. die mobilen Endgeräte einander bekannt machen. Anhand dieser Tokens können die Komponenten bzw. die Endgeräte sich gegenseitig identifizieren. Es kann eine Datenverbindung ausgehandelt werden. Der anschließende Datenaustausch funktioniert dann basierend auf üblichen Datenaustauschprotokollen. Solche Datenaustauschprotokolle können beispielsweise die paketweise Übertragung von Daten beinhalten. Bei solchen Datenverbindungen mit Datenaustauschprotokollen sind normalerweise Verfahren zur Realisierung eines sicheren Transfers von Daten vom Datenabsender zum Datenempfänger und umgekehrt realisiert. Mit einem sicheren Transfer von Daten ist hier insbesondere gemeint, dass übertragenen Daten nicht von Dritten abgehört werden können. Hiermit ist aber auch gemeint, dass sichergestellt werden kann, dass abgesendete Daten vom Absender tatsächlich beim Empfänger ankommen. Dies kann beispielsweise durch Prüfsummen realisiert werden, die in regelmäßigen Abständen beim Absender bzw. im Absender erzeugt werden und dann an den Empfänger bzw. an die Empfängerseite übermittelt werden. Anhand von Prüfsummen können dann empfangene Daten auf Ihre Korrektheit hin überprüft werden. Es kann insbesondere festgestellt werden, ob die Daten korrekt (fehlerfrei insbesondere ohne Bildfehler) übertragen wurden. In dem Fall, dass keine korrekte Übertragung erfolgte, kann ein Protokoll für den Transfer von Daten auch Vorschriften beinhalten, gemäß welchen nicht korrekt übermittelte Daten neu angefordert und dann neu versendet werden bis tatsächlich sichergestellt ist, dass vom Absender abgesendete Daten korrekt beim Empfänger ankommen.

Ein Problem derartiger Datenverbindungen ist, dass diese Datenverbindungen relativ aufwändige Hardware erfordern, die die Aufrechterhaltung der Datenverbindungen realisiert. Ein weiteres Problem ist, dass gegebenenfalls Probleme bei der Einrichtung der Datenverbindung auftreten können, die dann dazu führen, das Komponenten bzw. Komponenten und Endgeräte nicht korrekt/wie gewünscht miteinander kommunizieren. Solche Schwierigkeiten bei der Einrichtung von Datenverbindungen werden vom Benutzer solcher Systeme dann als Fehler bzw. als Komfortnachteil wahrgenommen.

Insbesondere im Bereich der smarten Wasserinstallation hat sich nun herausgestellt, dass häufig die tatsächlich notwendige Informationsmenge, die zur Realisierung gewünschter smarter Funktionen vom Absender zum Empfänger gelangen muss, relativ gering ist. Es sind auch viele Anwendungsfälle im Bereich smarter Wasserinstallation bekannt, in welchen die temporäre Nichtübermittlung von Informationen vom Benutzer gar nicht als großes Problem wahrgenommen wird. Die vom Benutzer gewünschte bestimmungsgemäße Hauptfunktion einer Wasserinstallation (die Bereitstellung von Wasser) kann häufig zumindest temporär ohne den Austausch von Daten realisiert werden. Dies gilt beispielsweise für Daten beinhaltet Informationen darüber, dass zu wartende Komponenten der Wasserinstallation ausgetauscht werden müssen. Es ist normalerweise nicht so relevant, ob ein Filter einer Wasserinstallation (der hier als Beispiel genommen werden soll) für ein etwas längeres Zeitintervall im Einsatz ist. Die Information, dass der Filter ausgetauscht werden soll, muss nicht immer zu einem ganz exakten Zeitpunkt an einen Benutzer übermittelt werden. Vielmehr ist es hier auch möglich, dass die Übertragung dieser Information, dass ein Filterwechsel erforderlich ist, bei Gelegenheit erfolgt - insbesondere dann, wenn eine Datenverbindung existiert. Für einen Benutzer ist ein derartiges Verhalten, bei dem die tatsächliche Übertragung der Daten nicht unbedingt sichergestellt ist, häufig angenehmer bzw. bequemer, als wenn eine Datenverbindung aufgrund von technischen Problemen der Datenverbindung gar nicht erst aufgebaut wird. Die Information, dass ein Filter zu wechseln wäre, würde dann erst gar nicht zum Benutzer gelangen.

Hiervon ausgehend ist es Aufgabe der hier beschriebenen Erfindung ein neuartiges Verfahren zum Betrieb eines Systems bestehend aus Komponenten einer Wasserinstallation und einem Endgerät zu realisieren, bei welchem die Kommunikation zwischen Komponenten der Wasserinstallation und dem Endgerät in neuartiger Weise erfolgt. Dieses Verfahren mindert die im Zusammenhang mit dem Stand der Technik geschilderten besonderen Schwierigkeiten mit Datenverbindungen im Bereich von Wasserinstallationen.

Das hier beschriebene Verfahren dient zum Betrieb eines Systems bestehend aus:
- einer Komponente einer Wasserinstallation mit mindestens einem wasserführenden Bauteil, wobei die Komponente mindestens eine Einrichtung zur Überwachung des wasserführenden Bauteils, ein elektronisches Steuergerät, sowie ein Funkmodul eingerichtet zumindest zum Versenden von Datennachrichten mit einem Funksignal aufweist,
- einem Endgerät mit einem Modul zur Darstellung von Zustandsinformationen des wasserführenden Bauteils sowie einem Funkmodul eingerichtet zumindest zum Empfangen von einem Funksignal mit Datennachrichten,
wobei das Verfahren folgende Schritte aufweist:
a) Ermitteln eines Zustandsinformationsparameters der Wasserinstallation mit der Einrichtung der Komponente zur Überwachung der Wasserinstallation;
b) Auswerten der Zustandsinformationsparameters in dem elektrischen Steuergerät der Komponente sowie Erstellung mindestens einer Datennachricht beinhaltend Informationen aus dem Zustandsinformationsparameter;
c) Versenden der mindestens einen Datennachricht mit dem Funkmodul der Komponente an einen unbegrenzten Empfängerkreis mit einem Funksignal;
d) Empfangen des Funksignals mit der Datennachricht mit dem Funkmodul des Endgerätes; und
e) Darstellen einer Zustandsinformation mit dem Modul des Endgerätes zur Darstellung basierend auf der Datennachricht für einen Benutzer;

Eine Wasserinstallation ist beispielsweise eine Installation von Wasserleitungen in einem Haus umfassend Hausanschlussleitungen zur Versorgung verschiedener Komponenten der Wasserinstallation und Zapfstellen, an denen Benutzer Wasser aus der Wasserinstallation entnehmen können, die beispielsweise in Küchen, in Bädern und oder in Gärten angeordnet sind.

Komponenten im Sinne des hier beschriebenen Verfahrens können alle Komponenten sein, die eine in irgendeiner Weise geartete smarte Funktion haben, die ein Benutzer über ein Endgerät überwachen, beeinflussen und/oder bedienen kann.

Der Begriff wasserführende Bauteile beschreibt diejenigen Bauteile bzw. Abschnitte innerhalb von Komponenten, in denen Wasser geführt wird. Die wasserführenden Bauteile sind üblicherweise die wesentlichen Bauteile der Komponenten, die für die Erfüllung der Funktion der Komponente in der Wasserinstallation vorgesehen sind. Die Komponenten können weitere Bauteile umfassen, die dann zur Realisierung der hier beschriebenen smarten Funktionen notwendig sind und die in Folge noch im Detail erläutert werden. Zu diesen Bauteilen, die zur Realisierung der smarten Funktionen notwendig sind, zählen beispielsweise Einrichtungen zur Überwachung, elektronische Steuergerät und das Funkmodul.

Eine Einrichtung zur Überwachung kann wahlweise eine Einrichtung zur direkten Überwachung oder eine Einrichtung zur indirekten Überwachung sein. Mit einer direkten Überwachung ist gemeint, dass aktuell bzw. permanent Parameter von dem wasserführenden Bauteil bzw. von dem Wasser darin, gewonnen und der Überwachung zugeführt werden. Mit einer indirekten Überwachung ist gemeint, dass ohne Kontakt bzw. Interaktion mit dem Wasser Parameter gewonnen werden, die einen Rückschluss auf die Wasserinstallation ermöglichen - beispielsweise, weil eine Korrelation auftritt. Eine solche Korrelation existiert beispielsweise bei einem Filter der mit der Zeit verschmutzt und einem Zeitzähler.

Ein elektronisches Steuergerät ist insbesondere ein elektronischer Chip und oder eine Platine, welche mit der Einrichtung zur Überwachung gewonnene Parameter empfängt, auswertet und aufbereitet, um sie anschließend an das Funkmodul in Form einer Datennachricht zu übermitteln. Das elektronische Steuergerät erzeugt die Datennachricht bzw. bereitet die Datennachricht für den Versand mit dem Funkmodul vor. Bei der Erzeugung und Vorbereitung der Datennachricht werden Zustandsinformationsparameter verarbeitet, so dass die in den Zustandsinformationsparametern enthaltenen Informationen, die in dem Modul des Endgerätes dargestellt werden sollen, in die Datennachricht gelangen.

Ein Funkmodul ist dazu eingerichtet, Funksignale auszusenden, die Daten beinhalten können. Das Funksignal ist insbesondere dazu geeignet, Datenbits zu übertragen, die von einem Empfängerfunkmodul empfangen werden können.

Eine Datennachricht ist eine Abfolge von Datenbits. Die Datennachricht hat eine bestimmte Bitlänge (Anzahl von Bits), welche aussagt, wie viele Bits hintereinander zur Datennachricht gehören. Die Datennachricht hat bevorzugt ein bestimmtes Bitmuster, welches einen Anfang der Datennachricht kennzeichnet und ein bestimmtes Bitmuster, welches ein Ende der Datennachricht kennzeichnet. Dazwischen sind die in der Datennachricht enthaltenen Daten.

Eine Zustandsinformationsparameter ist ein beliebiger Parameter, welcher einen Zustand des wasserführenden Bauteils der Komponente beschreibt. Der Zustandsinformationsparameter kann einen Zustand des wasserführenden Bauteils direkt beschreiben, in dem der Zustandsinformationsparameter basierend auf einem Messwert bezüglich der wasserführenden Komponente oder des in der wasserführenden Komponente enthaltenen Wassers gewonnen wurde. Der Zustandsinformationsparameter kann einen Zustand des wasserführenden Bauteils auch indirekt beschreiben, in dem die Zustandsinformation keine Informationen enthält, die tatsächlich an der wasserführenden Komponente gewonnen wurden, sondern nur eine Information, die in irgendeiner Weise mit Eigenschaften der wasserführenden Komponente korreliert und somit ein Rückschluss auf die wasserführenden Komponenten bzw. das geführte Wasser zulässt.

Das Endgerät ist insbesondere ein mobiles Endgerät auf das nachfolgend noch detaillierter eingegangen wird. Das Modul des Endgeräts dient zur Darstellung der Zustandsinformation. Das Endgerät kann weitere Module aufweisen, die neben dem hier beschriebenen Modul Teil des Endgerätes sind bzw. von dem Endgerät bereitgestellt werden und die komplett anderen Funktionen dienen.

Das hier beschriebene Verfahren ist grundsätzlich zweigeteilt. Die Verfahrensschritte a), b) und c) werden in der Komponente ausgeführt. Die Verfahrensschritte d) und e) werden in dem mobilen Endgerät ausgeführt. Die Verbindung zwischen den Verfahrensschritten a), b) und c) und den Verfahrensschritte d) und e) bildet das Zusammenspiel der Verfahrensschritte c) und d) wobei in Verfahrensschritte c) das Versenden der Datennachricht mit dem Funkmodul an einen unbegrenzten Empfängerkreis erfolgt und in Verfahrensschritt d) dieses Funksignal von dem Endgerät empfangen wird.

Ein besonderes Merkmal des hier beschriebenen Verfahrens ist, dass in Schritt c) der Versand der Datennachricht über das Funksignal an einen unbegrenzten Empfängerkreis erfolgt. Unmittelbar an dieses an einen unbegrenzten Empfängerkreis versendete Funksignal mit der Datennachricht wird in Schritt d) empfangen und der weiteren Verwertung zur Darstellung der Zustandsinformation in Schritt e) zugeführt. Üblicherweise (in anderen Anwendungen) werden zur Übermittlung derartiger Datennachrichten zwischen Komponenten einer Wasserinstallation und Endgeräten zunächst Datenverbindungen ausgehandelt, wie dies auch einleitend beschrieben ist. Basierend auf solchen Datenverbindungen erfolgt dann die Übertragung von Daten. Genau auf diesen Ansatz wird hier verzichtet. Es hat sich herausgestellt, dass es nicht erforderlich ist eine Datenverbindung gemäß einem Protokoll auszuhandeln, sodass eine sichere Datenübertragung zwischen der Komponente und dem Endgerät realisiert ist. Vielmehr hat sich herausgestellt, dass es in der hier behandelten Anwendung gar nicht so kritisch ist, ob die Datennachricht tatsächlich immer und unter allen Umständen beim Empfänger korrekt ankommt. Wenn der Empfänger (das Endgerät) die Datennachricht temporär einmal nicht erhält, dann wird einfach abgewartet, bis die Datennachricht bei einem nächsten Übertragungsversuch übertragen wird. Die mit dem Modul dargestellten Zustandsinformationen werden in Schritt e) bevorzugt aktualisiert, wenn eine Datennachricht empfangen wurde, die Informationen beinhaltet, die eine Aktualisierung der mit dem Modul dargestellten Zustandsinformationen erfordert.

Besonders vorteilhaft ist, wenn die Einrichtung einen Zeitzähler umfasst, mit welchem ein Wartungsintervall des mindestens einen wasserführenden Bauteils überwacht wird.

Ein Zeitzähler ist eine Einrichtung zur Überwachung des wasserführenden Bauteils, welche das wasserführende Bauteil bevorzugt nur indirekt überwacht. Mit einer "indirekten" Überwachung ist hier gemeint, dass keine Messung von Parametern der Wasserinstallation bzw. der Komponente und ihrer wasserführenden Bauteile erfolgt, sondern lediglich die Zeit gemessen wird und von der vergangenen Zeit darauf rückgeschlossen wird, ob ein Austausch und/oder eine Wartung des wasserführenden Bauteils erforderlich ist. Das Wartungsintervall, welches mit dem Zeitzähler überwacht wird, ist in diesem Fall starr.

Gegebenenfalls wird ein Zeitzähler zurückgesetzt, wenn ein Austausch des wasserführenden Bauteils oder einer Komponente des wasserführenden Bauteils erfolgt. Anschließend zählt ein Zeitzähler die verlaufende Zeit der Benutzung der Wasserinstallation. Dabei können verschiedene Sonderbedingungen berücksichtigt werden. Eine mögliche Sonderbedingung ist beispielsweise das nur die Zeit gezählt wird, in welcher die Wasserinstallation in Betrieb ist. Dann ist es jedoch erforderlich, dass der Zeitzähler nicht nur für eine indirekte Überwachung eingerichtet ist, sondern zusätzlich aufgrund einer direkten Überwachung (bspw. mit einem Wasserflusssensor) jeweils aktiviert und deaktiviert wird.

Bevorzugt ist in dem elektronischen Steuergerät fest einprogrammiert, wie lange bzw. wie viel Zeit gezählt werden soll, bevor anhand des Zeitzählers ein veränderter Zustandsinformationsparameter generiert wird, welcher dann in Form einer Datennachricht über ein Funksignal an einen unbegrenzten Empfängerkreis und darüber auch an das Endgerät übermittelt wird (Schritt c)), um den Benutzer darüber zu informieren, dass ein Austausch bzw. eine Wartung der Komponente erforderlich ist.

Besonders vorteilhaft ist, wenn die Einrichtung einen Sensor zur Überwachung von Betriebsparametern der Wasserinstallation umfasst.

Eine Einrichtung umfasst einen Sensor zur Überwachung von Betriebsparametern der Wasserinstallation, ist insbesondere unmittelbar an dem wasserführenden Bauteil angeordnet und besonders bevorzugt so an der Wasserinstallation angeordnet, dass der Sensor sogar in Kontakt mit dem Wasser in dem wasserführenden Bauteil ist. Mit einem solchen Sensor können Parameter gewonnen werden, die nützliche Informationen für einen Benutzer der Wasserinstallation beinhalten und über die für den Benutzer relevante Zustandsinformationen in dem Modul des Endgerätes bereitgestellt werden können.

Außerdem vorteilhaft ist, wenn das wasserführende Bauteil einen Filter umfasst und die dargestellte Zustandsinformation eine Information betreffend Wechselerfordernis des Filters ist.

Ein Wechselintervall für einen Filter kann mit dem hier beschriebenen Verfahren sehr einfach überwacht werden und die Information darüber, dass das Wechselintervall abgelaufen ist, kann einem Benutzer über ein Endgerät und ein Modul des Endgerätes sehr einfach zur Verfügung gestellt werden.

Darüber hinaus vorteilhaft ist, wenn das Endgerät ein mobiles Endgerät, und insbesondere ein Smartphone oder ein Tablet ist.

Derartige Endgeräte sind bei den meisten Nutzern verfügbar. Die Nutzung derartiger Endgeräte und auf derartigen Endgeräten bereitgestellten Modulen zur Bereitstellung von Informationen für den Benutzer einer smarten Wasserinstallation ist aus diesem Grunde besonders vorteilhaft.

Auch vorteilhaft ist, wenn das Modul eine App ist, die einen Datencontainer umfasst, welcher Daten zur Auswertung der Datennachricht zur Erzeugung einer Zustandsinformation basierend auf der Datennachricht aufweist.

Der Datencontainer ist insbesondere ein Datenspeicher des mobilen Endgerätes, der der App von dem mobilen Endgerät (teilweise) zur Verfügung gestellt wird.

Eine App kann von einem Benutzer auf einem mobilen Endgerät problemlos installiert werden. Entsprechende Verfahren zur Installation einer solchen App sind üblich und bekannt. Die App kann von dem Anbieter bzw. Hersteller der Komponente bereitgestellt werden. Daten sind in dem Datencontainer bevorzugt nach Art einer Datenbank und/oder einer Look-up-Tabelle abgelegt. Der Datencontainer kann beispielsweise eine Look-up-Tabelle umfassen, welche Informationen beinhaltet, welche Kodierung von Daten in der Datennachricht welchen Informationen entspricht. Durch einen derartigen Datencontainer und darin enthaltene Information kann die notwendige Länge der Datennachricht, die mit dem Funksignal übertragen wird bzw. übertragen werden muss damit die gewünschte Darstellung von Zustandsinformationen mit dem Modul möglich ist, stark reduziert werden.

Außerdem vorteilhaft ist das Verfahren, wenn
- das Funkmodul der Komponente auch zum Empfangen von Datennachrichten als Funksignal eingerichtet ist und die Komponente zusätzlich einen Steller zum Vornehmen einer Verstellung an dem wasserführenden Bauteil aufweist,
- das Funkmodul des Endgerätes auch zum Versenden von Datennachrichten mit Funksignalen eingerichtet ist und das Endgerät zusätzlich ein Modul zum Vornehmen von Einstellungen an dem wasserführenden Bauteil durch einen Benutzer aufweist,
wobei das Verfahren zusätzlich die folgenden Schritte aufweist:
A) Empfangen einer Einstellung von einem Benutzer mit dem Modul;
B) Auswerten der Einstellung in dem mobilen Endgerät und Erstellung mindestens einer Datennachricht beinhaltend Informationen betreffend die Einstellung
C) Versenden der mindestens einen Datennachricht mit dem Funkmodul des Endgerätes an einen unbegrenzten Empfängerkreis mit einem Funksignal;
D) Empfangen des Funksignals mit der Datennachricht mit dem Funkmodul der Komponente; und
E) Ermitteln einer Verstellung des wasserführenden Bauteils mit dem elektronischen Steuergerät der Komponente; und
F) Durchführen der Verstellung mit dem Steller der Komponente.

Die Verfahrensschritte A) bis F) umfassen nun eine zweite Kommunikationsrichtung, die mit dem beschriebenen Verfahren bevorzugt zusätzlich realisiert ist. Bei dieser Kommunikationsrichtung werden vom Benutzer gewünscht Einstellungen von dem Endgerät an die Komponente der Wasserinstallation übertragen. Diese gewünschten Einstellungen werden dann genutzt, um eine Verstellung der Wasserinstallation (beispielsweise eine Verstellung eines Ventils der Wasserinstallation, eine Verstellung eines Filters der Wasserinstallation oder Ähnliches) durchzuführen.

Der Versand der Datennachricht mit dem Funksignal erfolgt in Schritt C) hier ebenfalls an einen unbegrenzten Empfängerkreis. Bevorzugt erfolgt ebenfalls ein Wiederholen der Übersendung der Datennachricht mit dem Funksignal, um sicherzustellen, dass die Datennachricht mittelfristig beim Empfänger (hier der Komponente) ankommt. Für den Betrieb der Komponente ist es regelmäßig nicht erforderlich, dass Datennachrichten sofort eintreffen. Der Benutzer wird einen erneuten Versand der Datennachricht durch das mobile Endgerät schon akzeptieren, um die gewünschte Einstellung vorzunehmen bzw. mit der gewünschten Einstellung eine Verstellung der Komponente zu realisieren. Es ist für den Benutzer häufig einfacher, auf ein solches System zu vertrauen und gegebenenfalls etwas zu warten, bis die Verstellung tatsächlich wie gewünscht vorgenommen wird als mit den Schwierigkeiten, die mit der Einrichtung einer ausgehandelten Datenverbindung einhergehen, umgehen zu müssen.

Die Möglichkeit der Durchführung der Verfahrensschritte A) bis F) ermöglicht eine Rückmeldung über den Empfang einer Datennachricht am Endgerät an die Komponente. Bevorzugt existiert hierfür noch eine Alternative Ausführungsvariante mit den Verfahrensschritten A1) bis F1):
A1) Feststellen, dass in Schritt d) eine Datennachricht empfangen wurde, die eine Ausführung von Schritt e) zur Darstellung einer für einen Benutzer neuen Zustandsinformation (14) bzw. veränderten Zustandsinformation (14) auslöst,
B1) Erstellung mindestens einer Datennachricht beinhaltend Informationen betreffend den erfolgreichen Empfang der Datennachricht gemäß Schritt d) und/oder der Ausführung von Schritt e);
C1) Versenden der mindestens einen Datennachricht mit dem Funkmodul des Endgerätes an einen unbegrenzten Empfängerkreis mit einem Funksignal;
D1) Empfangen des Funksignals mit der Datennachricht mit dem Funkmodul der Komponente;
E1) Ermitteln der Information betreffend den erfolgreichen Empfang der Datennachricht gemäß Schritt d) und/oder der Ausführung von Schritt e); und
F1) Stoppen eines regelmäßig wiederholten Versandes der Datennachricht gemäß Schritt c).

Durch die Durchführung der Verfahrensschritte A1) bis F1) zumindest teilweise parallel zur Durchführung der Verfahrensschritte a) bis e) kann vermieden werden, dass permanent ein regelmäßig wiederholter Versend der Datennachricht gemäß Schritt c) erfolgt.

Wie schon ausgeführt ist es besonders vorteilhaft, wenn die mindestens eine Datennachricht regelmäßig wiederholt ausgesendet wird.

Eine regelmäßige Wiederholung von Verfahrensschritt c) erfolgt bevorzugt unabhängig davon, ob ein Empfang des Signals in Schritt d) erfolgte oder nicht. Bevorzugt ist die Komponente der Wasserinstallation so eingerichtet, dass eine Überwachung des Empfangs des Signals in Schritt d) gar nicht oder nur sehr unregelmäßig möglich ist. Durch eine regelmäßige Wiederholung von Verfahrensschritt c) kann eine ausreichende Wahrscheinlichkeit erzielt werden, dass die Datennachricht zumindest mittelfristig beim Endgerät ankommt. Ein Wiederholintervall zur Durchführung des Verfahrensschritte c) kann beispielsweise zwischen 5 Sekunden und 30 Minuten betragen. Beliebige Wiederholintervalle sind möglich.

Besonders vorteilhaft ist in diesem Zusammenhang, wenn die Komponente einen externen Stromanschluss hat, welcher der Komponente und ihren Bauteilen Strom aus einem Versorgungsnetz zur Verfügung stellt. Grundsätzlich ist der Energiebedarf für die Durchführung von Schritt c) bereits ehr gering. Bei einer Komponente mit einem externen Stromanschluss , welcher beliebig viel Energie zur Verfügung stellen kann, fällt dieser Energiebedarf allerdings sogar ganz besonders wenig ins Gewicht, so dass ein Wiederholintervall besonders klein/kurz sein kann. Durch ein kleines/kurzes Wiederholintervall wird eine besonders hohe Wahrscheinlichkeit erreicht, einen erfolgreichen Empfang der Datennachricht durch das Funkmodul des Endgerätes gemäß Schritt d) zu realisieren.

Außerdem vorteilhaft ist, wenn die mindestens eine Datennachricht eine Beacon-Nachricht ist,
Darüber hinaus vorteilhaft ist, wenn das Funksignal ein Niedrigenergiesignal mit einer Reichweite von bis zu 50 Metern ist.

Die Beacon Technik basiert auf BLE - Bluetooth Low Energy. Ein BLE-fähiges Gerät wird dadurch in die Lage versetzt, ein sogenanntes Broadcasting Verfahren einzuleiten. Beacons sind kleine Funksender, die Bluetooth-Signale aussenden. Es sendet in einem festen Intervall immer die gleichen Werte, ähnlich einem Leuchtfeuer. Das Funkmodul ist bevorzugt ein derartiger BLE-fähiger Sensor. Die Datennachricht wird bevorzugt als iBeacon versendet. Bei einem iBeacon besteht die ausgesendete Nachricht, das sogenannte Standard Advertisment, aus UUID, Ma-jor und Minor. Diese einmalige Kombination empfängt das Endgerät und kann es auswerten, ohne dass eine Kopplung oder ein Datenaustausch notwendig wäre.

Ein weiterer Kommunikationsstandard, derfür das hier beschriebene Verfahren verwendet werden kann, sind sogenannte WLAN-Beacons. Noch ein weiterer Kommunikationsstandard ist Zigbee. Grundsätzlich sind für das beschriebene Verfahren Funktechnologien verwendbar mit denen Nachrichten an einen unbegrenzten Personenkreis übermittelt werden.

Sobald sich das Endgerät im Sendebereich des Funkmoduls der Komponente befindet, sind Daten empfangbar. Die Datennachricht wird von dem Modul des Endgerätes bevorzugt in Form einer Hintergrundaktualisierung ausgewertet. Somit werden Informationen aktualisiert und bei Bedarf kann eine Benachrichtigung an den Benutzer erfolgen.

Hier auch beschrieben werden soll eine Komponente einer Wasserinstallation mit mindestens einem wasserführenden Bauteil, wobei die Komponente mindestens eine Einrichtung zur Überwachung des wasserführenden Bauteils, ein elektronisches Steuergerät, sowie ein Funkmodul eingerichtet zumindest zum Versenden von Datennachrichten aufweist, wobei die Komponente zur Durchführung eines Verfahrens gemäß einem der vorhergehenden Ansprüche in einem System zusätzlich umfassend ein Endgerät mit einem Modul zur Darstellung von Zustandsinformationen des wasserführenden Bauteils sowie einem Funkmodul eingerichtet zumindest zum Empfangen von Datennachrichten.

Die Komponente ist insbesondere für die Durchführung des hier beschriebenen Verfahrens eingerichtet. Die im Zusammenhang mit dem beschriebenen Verfahren erläuterten Vorteile und Merkmale sind auf die Komponente anwendbar.

Die Erfindung sowie das technische Umfeld werden nachfolgend anhand der Figuren näher erläutert. Die Figuren zeigen nur ein bevorzugtes Ausführungsbeispiel, auf welches die Erfindung nicht begrenzt ist.
Fig. 1: ein System zur Durchführung des beschriebenen Verfahrens;
Fig. 2: ein Ablaufdiagramm des beschriebenen Verfahrens;

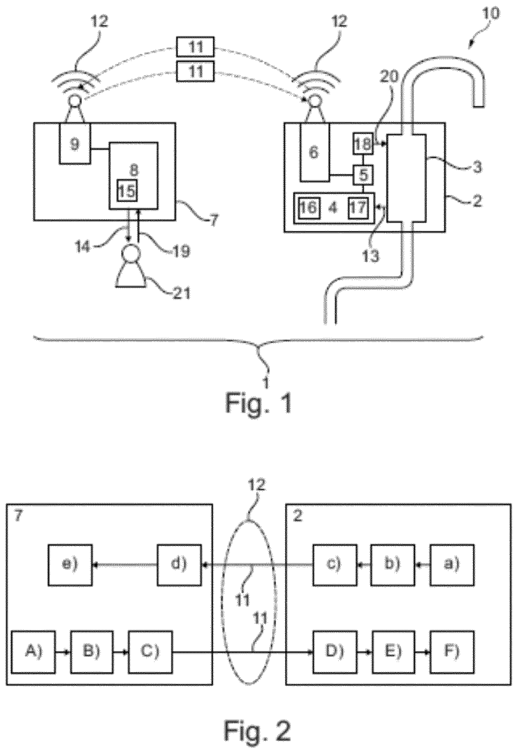

Fig. 1 zeigt ein System 1 umfassend eine Wasserinstallation 10 sowie ein Endgerät 7. Die Wasserinstallation 10 weist eine Komponente 2 auf, die ein wasserführendes Bauteil 3 beinhaltet, welches überwacht werden kann. Die Komponente 2 hat eine Einrichtung zur Überwachung 4, des wasserführenden Bauteils 3, welche dazu eingerichtet ist, Informationen über den Zustand des wasserführenden Bauteils 3 an ein elektronisches Steuergerät 5 der Komponente 2 zu übermitteln. An das elektronische Steuergerät 5 ist ein Funkmodul 6 angeschlossen, welches dazu eingerichtet ist, ein Funksignal 12 auszusenden, welches eine Datennachricht 11 transportiert, in welcher Zustandsinformationsparameter 13 betreffend den Zustand des wasserführenden Bauteils 3 beinhaltet. Die Einrichtung zur Überwachung 4 kann verschiedene Mittel zur Überwachung aufweisen. Hier beispielhaft dargestellt sind ein Zeitzähler 16 und ein Sensor 13, der unmittelbar Zustandsinformationsparameter 13 von dem wasserführenden Bauteil 3 bzw. dem darin vorliegenden Wasser ermitteln. Das Funksignal 12 mit der Datennachricht 11 kann von dem Endgerät 7 empfangen werden. Das Endgerät 11 hat dafür ebenfalls ein Funkmodul 9. Über das Funkmodul 9 wird die Datennachricht 11 in dem Endgerät 7 von dem Modul 8 aufgenommen, welches basierend auf der Datennachricht 11 bzw. dem in der Datennachricht 11 enthaltenen Zustandsinformationsparameter 13 Zustandsinformationen 14 für den Benutzer 21 bereitstellt. Das Modul 8 kann einen Datencontainer 15 aufweisen, in welchem beispielsweise eine Look-Up-Tabelle enthalten sein kann, anhand derer die Datennachrichten 11 bzw. die darin enthaltenen Zustandsinformationen 13 von dem Modul 8 ausgewertet bzw. angereichert werden können.

In der Fig. 1 ebenfalls dargestellt ist ein anderer Anwendungsfall, in welchem der Benutzer 21 eine Einstellung 19 für die Wasserinstallation 10 bzw. für die Komponente 2 der Wasserinstallation 10 an das Endgerät 7 bzw. an dem auf dem Endgerät 7 betriebenen Modul 8 vornimmt. Das Endgerät 7 bildet dann basierend auf der Einstellung 19 eine Datennachricht 11, die von dem Funkmodul 9 über ein Funkmodul 9 ausgesendet wird und von dem Funkmodul 6 der Komponente 2 empfangen wird. Die Komponente 2 hat einen Steller 18 mit welchem basierend auf der Einstellung 19 eine Verstellung 20 des wasserführenden Bauteils 3 der Komponente 2 vorgenommen wird.

Das Zusammenwirken des Endgeräts 7 und der Komponente 2 der Wasserinstallation gemäß dem hier beschriebenen Verfahren ist in der Fig. 2 noch einmal dargestellt. Dargestellt ist ein erster Teil des Verfahrens mit den Verfahrensschritten a), b), c), d) und e), wobei a), b) und c) in der Komponente 2 und d) und e) in dem Endgerät 7 ausgeführt werden. Hierbei geht es um die Übermittlung von Informationen von der Komponente 2 bzw. des darin angeordneten wasserführenden Bauteils an den Benutzer über das Endgerät 7.

Dargestellt ist außerdem ein zweiter Teil des Verfahrens mit den Verfahrensschritten A), B), C), D), E) und F), wobei hier die Verfahrensschritte A), B) und C) mit bzw. in dem Endgerät 7 und die Verfahrensschritte D), E) und F) in der Komponente 2 bzw. mit der Komponente 2 ausgeführt werden.

Für beide Teile des beschriebenen Verfahrens erfolgt die Kommunikation zwischen der Komponente 2 und dem Endgerät 7 über Funksignale 12, die Datennachrichten 11 transportieren, die eine Informationsübertragung zwischen dem Endgerät 7 und der Komponente 2 in beide Richtungen ermöglichen.

### Bezugszeichenliste

- 1: System
- 2: Komponente
- 3: wasserführendes Bauteil
- 4: Einrichtung zur Überwachung
- 5: elektronisches Steuergerät
- 6: Funkmodul
- 7: Endgerät
- 8: Modul
- 9: Funkmodul
- 10: Wasserinstallation
- 11: Datennachricht
- 12: Funksignal
- 13: Zustandsinformationsparameter
- 14: Zustandsinformation
- 15: Datencontainer
- 16: Zeitzähler
- 17: Sensor
- 18: Steller
- 19: Einstellung
- 20: Verstellung
- 21: Benutzer

## Patentansprüche

1. Verfahren zum Betrieb eines Systems (1) bestehend aus:
- einer Komponente (2) einer Wasserinstallation (10) mit mindestens einem wasserführenden Bauteil (3), wobei die Komponente (2) mindestens eine Einrichtung zur Überwachung (4) des wasserführenden Bauteils (3), ein elektronisches Steuergerät (5), sowie ein Funkmodul (6) eingerichtet zumindest zum Versenden von Datennachrichten (11) mit einem Funksignal (12) aufweist,
- einem Endgerät (7) mit einem Modul (8) zur Darstellung von Zustandsinformationen (14) des wasserführenden Bauteils (3) sowie einem Funkmodul (9) eingerichtet zumindest zum Empfangen von einem Funksignal (12) mit Datennachrichten (11),
wobei das Verfahren folgende Schritte aufweist:
a) Ermitteln eines Zustandsinformationsparameters (13) der Wasserinstallation (10) mit der Einrichtung (4) der Komponente (2) zur Überwachung der Wasserinstallation (10);
b) Auswerten der Zustandsinformationsparameters (13) in dem elektronischen Steuergerät (5) der Komponente (2) sowie Erstellung mindestens einer Datennachricht (11) beinhaltend Informationen aus dem Zustandsinformationsparameter (13);
c) Versenden der mindestens einen Datennachricht (11) mit dem Funkmodul (6) der Komponente (2) an einen unbegrenzten Empfängerkreis mit einem Funksignal (12);
d) Empfangen des Funksignals (12) mit der Datennachricht (11) mit dem Funkmodul (9) des Endgerätes (7); und
e) Darstellen einer Zustandsinformation (14) mit dem Modul (8) des Endgerätes (7) zur Darstellung basierend auf der Datennachricht (11) für einen Benutzer (21).

2. Verfahren nach Anspruch 1, wobei die Einrichtung einen Zeitzähler (16) umfasst, mit welchem ein Wartungsintervall des mindestens einen wasserführenden Bauteils (3) überwacht wird.

3. Verfahren nach einem der vorhergehenden Ansprüche, wobei die Einrichtung einen Sensor (17) zur Überwachung von Betriebsparametern der Wasserinstallation (10) umfasst.

4. Verfahren nach einem der vorhergehenden Ansprüche, wobei das wasserführende Bauteil (3) einen Filter umfasst und die dargestellte Zustandsinformation (14) eine Information betreffend Wechselerfordernis des Filters ist.

5. Verfahren nach einem der vorhergehenden Ansprüche, wobei das Endgerät (7) ein mobiles Endgerät (7) und insbesondere ein Smartphone oder ein Tablet ist.

6. Verfahren nach einem der vorhergehenden Ansprüche, wobei das Modul (8) eine App ist, die einen Datencontainer (15) umfasst, welcher Daten zur Auswertung der Datennachricht (11) zur Erzeugung einer Zustandsinformation (14) basierend auf der Datennachricht (11) aufweist.

7. Verfahren nach einem der vorhergehenden Ansprüche, wobei
- das Funkmodul (6) der Komponente (2) auch zum Empfangen von Datennachrichten (11) als Funksignal (12)eingerichtet ist und die Komponente (2) zusätzlich einen Steller(18) zum Vornehmen einer Verstellung (20) an dem wasserführenden Bauteil (3) aufweist,
- das Funkmodul (9) des Endgerätes (7) auch zum Versenden von Datennachrichten (11) mit Funksignalen (12) eingerichtet ist und das Endgerät (7) zusätzlich ein Modul (8) zum Vornehmen von Einstellungen (19) an dem wasserführenden Bauteil (3) durch einen Benutzer (21) aufweist,
wobei das Verfahren zusätzlich die folgenden Schritte aufweist:
A) Empfangen einer Einstellung (19) von einem Benutzer (21) mit dem Modul (8);
B) Auswerten der Einstellung (19) in dem mobilen Endgerät (7) und Erstellung mindestens einer Datennachricht (11) beinhaltend Informationen betreffend die Einstellung (19)
C) Versenden der mindestens einen Datennachricht (11) mit dem Funkmodul (9) des Endgerätes (7) an einen unbegrenzten Empfängerkreis mit einem Funksignal (12);
D) Empfangen des Funksignals (12) mit der Datennachricht (11) mit dem Funkmodul (6) der Komponente (2); und
E) Ermitteln einer Verstellung (20) des wasserführenden Bauteils (3) mit dem elektronischen Steuergerät (5) der Komponente (2); und
F) Durchführen der Verstellung (20) mit dem Steller (18) der Komponente (2).

8. Verfahren nach einem dervorhergehenden Ansprüche, wobei die mindestens eine Datennachricht (11) regelmäßig wiederholt ausgesendet wird.

9. Verfahren nach einem der vorhergehenden Ansprüche, wobei die mindestens eine Datennachricht (11) eine Beacon-Nachricht ist,

10. Verfahren nach einem der vorhergehenden Ansprüche, wobei das Funksignal (12) ein Niedrigenergiesignal mit einer Reichweite von bis zu 50 Metern ist.

11. Komponente (2) einer Wasserinstallation (10) mit mindestens einem wasserführenden Bauteil (3), wobei die Komponente (2) mindestens eine Einrichtung (4) zur Überwachung des wasserführenden Bauteils (3), ein elektronisches Steuergerät (5), sowie ein Funkmodul (6) eingerichtet zumindest zum Versenden von Datennachrichten (11) aufweist, wobei die Komponente (2) zur Durchführung eines Verfahrens gemäß einem der vorhergehenden Ansprüche in einem System (1) zusätzlich umfassend ein Endgerät (7) mit einem Modul (8) zur Darstellung von Zustandsinformationen (14) des wasserführenden Bauteils (3) sowie einem Funkmodul (9) eingerichtet zumindest zum Empfangen von Datennachrichten (11).
